# EUROPEAN PATENT APPLICATION

(11) **EP 1 426 280 A1**
(43) Date of publication of application: **09.06.2004**
(21) Application number: 04000761.9
(22) Date of filing: 04.07.2002
(51) Int. Cl.: B62K 21/00, B62K 21/10

(54) **Two-wheeled vehicle**

(30) Priority: 04.07.2001 JP 2001203191
(62) Divisional of application: 02014861.5
(71) Applicant: YAMAHA HATSUDOKI KABUSHIKI KAISHA, Iwata-shi Shizuoka-ken (JP)
(72) Inventor: Aoki, Shigemitsu, Iwata-shi Shizuoka-ken (JP)
(74) Representative: Grünecker, Kinkeldey, Stockmair & Schwanhäusser Anwaltssozietät

(57) **Abstract**

Two-wheeled vehicle comprising a vehicle body and front and rear wheels, wherein at least either one of the front or rear wheels is drivable by a front-wheel and/or rear-wheel drive device and either the front wheel or the rear wheel is adapted to be steerable by means of a steering device, said steering device comprising a steering operating means and a steering actuator, wherein a steering movement of the steering operating means for steering operation is detectable and the respectively steered front or rear wheel is adapted to change a steering angle by an action of the steering actuator.

## Description

The present invention relates to a two-wheeled vehicle comprising a vehicle body and front and rear wheels.

Conventionally, a two-wheeled vehicle, in particular a motorcycle, is operated by a rider who straddles a seat thereof and grabs steering handlebars (as a direct mechanical steering system). In order to allow the two-wheeled vehicle (the motorcycle) to run, the rider steers the front wheel using the handlebars for steering operation to determine the running direction, and then balances in the transverse (side-to-side) direction by laterally shifting his/her weight.

Thus, a conventional motorcycle had to be balanced in the transverse direction by the rider laterally shifting his/her position. Accordingly, the rider encounters a problem that the rider tends to get fatigued, compared to riding a four-wheeled vehicle. Potentially, the rider might further get fatigued by the direct mechanical steering system.

The present invention has been made to solve the above problems, and it is, therefore, an objective of the present invention to provide a two-wheeled vehicle reducing a rider's fatigue.

The objective of the present invention is solved by a two-wheeled vehicle comprising a vehicle body and front and rear wheels, wherein at least either one of the front or rear wheels is drivable by a front-wheel and/or rear-wheel drive device and either the front wheel or the rear wheel is adapted to be steerable by means of a steering device, said steering device comprising a steering operating means and a steering actuator, wherein a steering movement of the steering operating means for steering operation is detectable and the respectively steered front or rear wheel is adapted to change a steering angle by an action of the steering actuator.

Accordingly, the two-wheeled vehicle is steered exclusively "by wire", i.e. without a direct connection in the steering system with mechanical parts, thus relieving the rider and, therefore, reducing fatigue of the rider.

It is beneficial if there is provided a power means comprising a battery for supplying electricity.

Therein, at least one of the drive devices may be used as a generator for battery charging, in particular during downhill running of the two-wheeled vehicle.

For said solution given above, it is preferable if there are provided a steering angle detection sensor and/or a skid detection sensor to detect a movement of the vehicle body in the transverse direction by the action of side winds or other reasons and/or a vehicle speed sensor to detect the vehicle speed and/or an airspeed detection sensor to detect head wind, tail wind and side winds and/or a GPS to detect a running direction connected to the controller being provided for further detection of the current status of the vehicle body.

Also, the controller may be provided with an artificial intelligence device, such as GA, fuzzy controller or neutral network.

Further, the two-wheeled vehicle may be a motorcycle having a cab with a seat for a rider, in which the rider is seated with his/her legs adjacent to each other and/or the steering operating means is a handlebar and the steering movement is a shift in a rotation angle of the handlebar.

According to a particularly preferred embodiment of the present two-wheeled vehicle, the front wheel and the rear wheel are respectively drivable by a front-wheel drive device and a rear-wheel drive device, wherein the attitude-control means is adapted to apply a torque control to the front and rear wheels for creating the biasing force in the lateral direction of the vehicle body based on the current status of the vehicle body detected by the inclination sensor for balancing the two-wheeled vehicle in the transverse direction of the vehicle body.

Therein, the attitude-control means may be adapted to control the front-wheel and rear-wheel drive devices by applying a front-wheel driving torque and a rear-wheel driving torque having opposing directions to each other when the vehicle body is inclined transversely.

Moreover, the front wheel may be rotatably supported by a front fork, wherein the steering device is adapted to change the steering angle of the front fork, the front-wheel drive device may be provided in a hub of the front wheel and the rear wheel may be rotatably supported by a rear-wheel swing arm, wherein the rear-wheel drive device comprises a rear-wheel drive motor disposed under the seat of the rider for driving the rear wheel via a transmission device provided in the rear-wheel swing arm.

As an alternative to this, the front and rear wheels may be respectively supported by front-wheel and rear-wheel swing arms, wherein the steering device is adapted to change the steering angle of the rear wheel, the rear wheel drive device may be comprised of a motor provided in a hub of the rear wheel and the steering actuator, and the front-wheel drive device may be disposed at the front end of the vehicle body frame, wherein a driving force is transmitted to the front wheel via a transmission device provided in the front-wheel swing arm.

Beneficially, there is provided a driving control means comprises a circuit to increase or decrease an output to the front-wheel drive device and the rear-wheel drive device in correspondence with a displacement of an accelerator means applied by a rider.

Moreover, the attitude-control means may comprise a circuit to control the driving torques of the front-wheel and rear-wheel drive devices based on the current status of the vehicle body, wherein opposing driving torques are applied to each of the front and the rear wheels when the vehicle body is inclined transversely.

According to a further particularly preferred embodiment of the present two-wheeled vehicle, the front and rear wheels are respectively supported by front-wheel and rear-wheel swing arms, wherein the front wheel as a driving wheel is drivable by means of a front-wheel drive device and the rear wheel as a steering wheel is steerable by means of the steering device, and wherein the steering device is disposed at a rear end of the rear-wheel swing arm.

Therein, the attitude-control means may be adapted to create the biasing force in the lateral direction of the vehicle body by modifying the steering angle of the rear wheel based on the current status of the vehicle body detected by the inclination sensor for maintaining the two-wheeled vehicle transversely in balance.

Beneficially, the rear-wheel swing arm is adapted to oscillate in a transverse direction with respect to a vehicle body frame, wherein a transverse angle is changeable by means of an oscillating actuator and the attitude control means is adapted to create the biasing force in the lateral direction of the vehicle body by moving the rear wheel parallel to the lateral direction with respect to the vehicles center line based on the current status of the vehicle body detected by the inclination sensor for maintaining the two-wheeled vehicle transversely in balance.

In the following, the present invention is explained in greater detail with respect to several embodiments thereof in conjunction with the accompanying drawings, wherein:
- Fig.1: is a perspective view of a motorcycle according to a first embodiment;
- Fig. 2: is a block diagram, showing a constitution of an attitude-control device;
- Fig. 3: is an exploded perspective view, showing a second embodiment of a motorcycle causing biasing force in the transverse direction by controlling driving torque of front and rear wheels;
- Fig. 4: is an exploded perspective view, showing a third embodiment of a motorcycle causing biasing force in the transverse direction by steering a rear wheel;
- Fig. 5: is an exploded perspective view, showing a fourth embodiment of a motorcycle causing biasing force in the transverse direction by a parallel shifting of a rear wheel; and
- Fig. 6: is an exploded perspective view, showing a constitution of a motorcycle according to a fifth embodiment that employs all the control methods of the first to fourth embodiments.

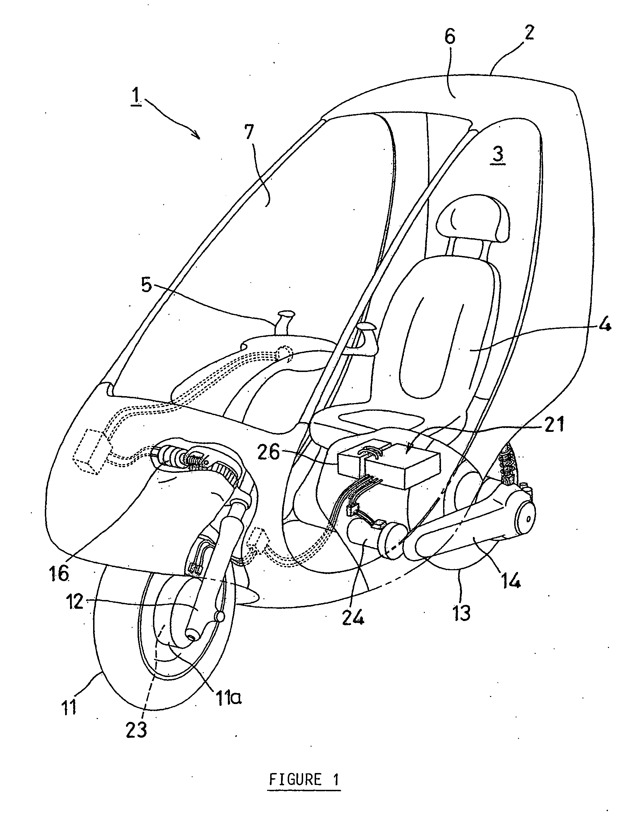

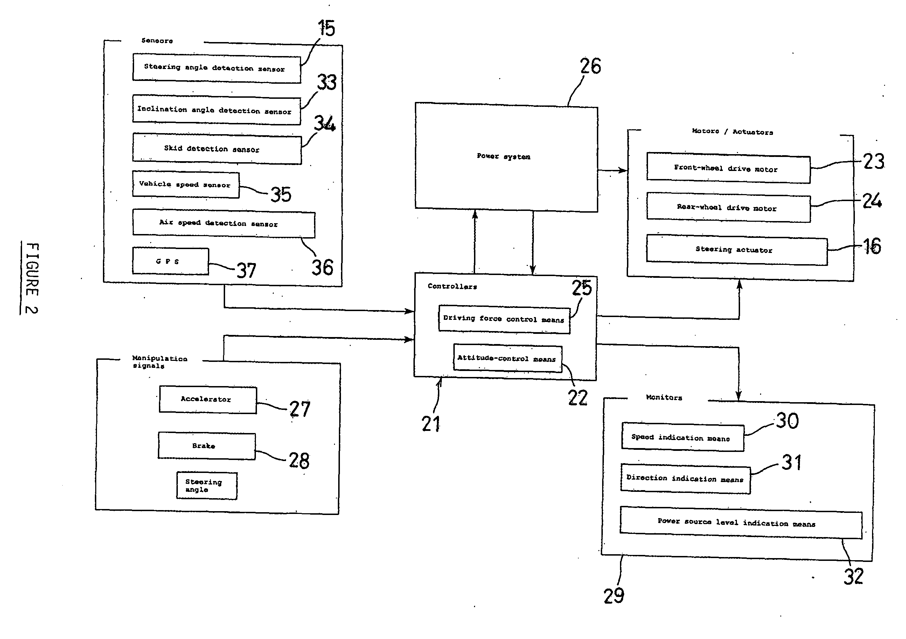

A detailed description of an embodiment of a motorcycle according to the first embodiment is provided herein with reference to Figs. 1 and 2.

The Fig. 1 is a perspective view of a motorcycle according to the first embodiment and Fig. 2 is a block diagram, showing a constitution of an attitude-control device.

In the drawings, reference numeral 1 shows a motorcycle according to this first embodiment. The motorcycle 1 forms a driver's cab 3 consisting of a vehicle body cover 2, and provides a seat 4 and a handlebar 5 for steering operation in the driver's cab 3. For the driver's cab 3, upper section thereof is covered by a roof 6 and a front screen 7 and formed to enable the rider to get on or off from opposite sides thereof. The seat 4 such that a rider can sit with his/her both legs together is used.

Also, in the motorcycle 1, the front wheel 11 is supported by the telescopic front fork 12 on the vehicle body frame (not shown) and the rear wheel 13 is supported oscillatorily by the rear wheel swing arm 14 on the vehicle body frame. The steering device used in the motorcycle 1 is of the motor-driven type, which employs a constitution in that the rotation angle of the handlebar for steering operation 5 is detected by the steering angle detection sensor 15 (see Fig. 2) and the front fork 12 is rotated by the steering actuator 16 so as to act on this detected data. The steering actuator 16 is controlled by an attitude-control means 22 of a controller 21 as discussed later.

In addition, the motorcycle 1 drives both the front and the rear wheels 11, 13 through the drive motors 23, 24 respectively to run. The front-wheel drive motor 23 is housed within a hub 11 a of the front wheel 11 to drive the front wheel 11 through transmitting rotational power to the hub 11a. The rear-wheel drive motor 24 is disposed below the seat 4 to transmit power to the rear wheel 13 through a belt transmission device (not shown) located within the swing arm 14. These motors 23, 24 are controlled by the controller 21 disposed below the seat 4.

The controller 21, as shown in the Fig. 2, is composed of a driving force control means 25 (see Fig. 2) for causing driving force on the front and the rear wheels 11, 13 through both the motors 23, 24 and then allowing the motorcycle 1 to run and the attitude-control means 22 for transversely maintaining the motorcycle 1 in balance during its running, and connects a power system 26 disposed adjacent thereto. Into the controller 21 is also input various types of detected data discussed later and manipulation signals of operators such as an accelerator 27 and a brake 28 that the rider operates. This controller 21 sends control signals to the front and the rear-wheel drive motors 23, 24, the steering actuator 16, and a monitor 29 for indicating various types of information.

The power system 26 consists of a battery for supplying electricity (not shown), an electronic circuit for regulating this battery charge and discharge, and others. For battery charging, the front-wheel drive motor 23 is used as a generator on a downhill run, for example. The monitor 29 is located in the driver's cab 3 to allow the rider to make visual check and comprised of a speed indication means 30 to indicate the vehicle speed, a direction indication means 31 to indicate the running direction of the vehicle body and a power source level indication means 32 to indicate the amounts of battery charge remaining and power consumption.

The driving force control means 25 of the controller 21 employ a circuit to increase and decrease the output of both the motors 23, 24 corresponding to the displacement of the accelerator 27 disposed within the driver's cab 3.

The attitude-control means 22 of the controller 21 detects the current status of the vehicle body by means of various types of sensors installed therein and employs a circuit to control the driving torque of both the motors 23, 24 based on the detected data from these sensors. More particularly, the attitude-control means 22 controls both the motors 23, 24 by applying opposing driving torque to each of the front and the rear wheels 11, 13 when the vehicle body is inclined transversely. Each driving torque of the front and the rear wheels is changed, thereby causing biasing force for urging the vehicle body in the transverse direction. The attitude-control means 22 is constituted to transversely maintain the vehicle body in balance with the basing force.

As shown in the Fig. 2, the various types of sensors include the steering angle detection sensor 15, an inclination angle detection sensor 33 to detect the angle of inclination of the vehicle body, a skid detection sensor 34 to detect a movement of the vehicle body in the transverse direction by the action of side winds or other causes, a vehicle speed sensor 35 to detect the vehicle speed, an airspeed detection sensor 36 to detect a head wind, a tail wind and side winds, and a GPS 37 to detect the running direction.

On turning, for example, when the handlebar is operated by the rider, the attitude-control means 22 detects the steering direction and the steering angle, which allows the steering actuator 16 to steer the front wheel 11 to the same direction as detected while the attitude-control means 22 controls the driving torque of the both drive motors 23, 24. This torque control is exercised by reducing the driving torque of the front wheel 11 (being substantially same action as braking) while increasing the driving torque of the rear wheel 13. Namely, both motors 23, 24 are controlled by applying opposing driving torque to each of the front and the rear wheels 11, 13.

In this case turning is still possible without reducing speed owing to a relatively smaller steering angle, both motors 23, 24 are controlled avoiding the vehicle speed from being reduced by means of the torque control. If the vehicle speed is lowered, the driving torque of the rear wheel 13 should be maintained constant or any necessary increases in the driving torque minimized.

Such changes of the driving torque of the front and the rear wheels 11, 13 allow biasing force for urging the vehicle body in the transverse direction to be exerted thereon. The direction to which this biasing force is exerted is the same as the direction that the front wheel 11 is oriented.

Therefore, the torque is controlled after steering, which allows the vehicle body to incline in the same direction as the steering direction. When steering the front wheel 11 to the left, the vehicle body inclines leftward. Also, when the vehicle body is inclined, relatively increasing driving torque of the front wheel 11 while relatively reducing the driving torque of the rear wheel 13 in an opposite manner to that described above allows the direction urged by the biasing force to be opposite to that described above, thereby restoring the vehicle body to an upright position.

The attitude-controller means 22 detects the angle of inclination of the vehicle body by the inclination angle detection sensor 33 and then changes the magnitude and the direction of this biasing force to allow the angle of inclination of the vehicle body to correspond with the steering angle, thereby transversely maintaining the vehicle body in balance on turning.

When the rider attempts to return the steering handlebar 5 to the straight-ahead position after turning, the attitude-control means 22 increases the driving torque of the front wheel 11 to allow the biasing force to be exerted on the vehicle body in the direction for returning to an upright position.

In order to maintain the straight-ahead running, when the angle of inclination of the vehicle detected by the inclination angle detection sensor 33 exceeds a predetermined value, the attitude-control means 22 increases the driving torque of the front wheel 11 while reducing the driving torque of the rear wheel 13, thereby causing biasing force in the direction for restoring the vehicle body to the upright position. If the vehicle body inclines either leftward or rightward by the action of sudden side winds or other causes, the skid detection sensor 34 and the GPS detects this behavior of the vehicle body and then corrects the running direction. In case of such correcting control, the attitude-control means 22 allows the steering actuator 16 to steer the front wheel 11 toward the correct direction while allowing the driving torque control to incline the vehicle body. This correction results in returning the front wheel 11 to the straight-ahead position and restoring the vehicle body to the upright position. If the vehicle body is inclined when subjected to the side winds or laterally pushed by winds, the same controlling procedure as described above is also exercised. Such side winds are detected by the airspeed detection sensor 36. Providing the airspeed detection sensor 36 enables identification of the influence caused by inclination in the transverse direction of the road or unbalanced load, or the influence from continuous side winds, thereby permitting a proper control of the running direction of the vehicle.

Therefore, according to the motorcycle 1, since using the biasing force caused by the changes of the driving torque of the front and the rear wheels 11, 13 to transversely maintain the vehicle body in balance in lieu of a force exerted on the vehicle body by a rider's weight shift, it becomes unnecessary for the rider to shift his/her weight in order to balance in the transverse direction or only a slight weight shift is required even if necessary.

In the attitude-control means 22 may be disposed an artificial-intelligence device (i.e. GA, fuzzy controller and neutral network) that can govern to make the intelligent determination in response to various driving conditions and changes in driving environment such as a wind speed detected by the airspeed detection sensor 36.

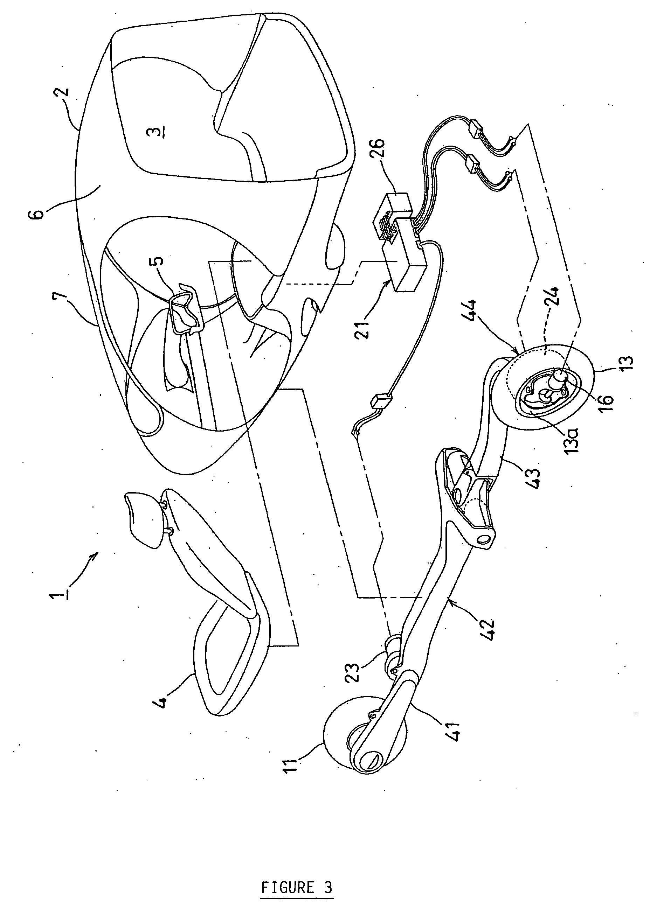

A motorcycle 1 according to a second embodiment may be constituted so as to have a steering rear wheel as shown in the Fig. 3.

Fig. 3 is an exploded perspective view, showing the second embodiment of a motorcycle causing biasing force in the transverse direction by controlling driving torque of front and rear wheels. In the drawing, the similar or equivalent elements described in the Figs. 1 and 2 are designated with the same numerals and their detailed description is not repeated as appropriate.

The front wheel 11 of the motorcycle 1 shown in the Fig. 3 is supported oscillatorily at the vehicle frame 42 through a front wheel swing arm 41. The motorcycle 1 according to this embodiment employs a constitution to steer by means of the rear wheel 13 and the front wheel 11 is rotatably supported by the swing arm 41 at its front end without left/right turning capability. The front wheel swing arm 41 is supported oscillatorily at its rear end by the front end of the vehicle body frame 42. A front cushion unit (not shown) is fitted between the swing arm 41 and the vehicle body frame 42.

The vehicle body frame 42 mounts the front-wheel drive motor 23 at its front end adjacent to the base portion of the swing arm 41 and pivotally up and down connects the front end of the rear wheel swing arm 43 to its rear end. Power of the front-wheel drive motor 23 is transmitted to the front wheel 11 through a belt transmission device (not shown) within the front wheel swing arm 41.

The rear wheel swing arm 43 cantilevers the rear wheel 13 at its rear end through a rear wheel drive device 44. The rear wheel drive device 44 is comprised of a rear-wheel drive motor 24 disposed within a hub 13 of the rear wheel 13 and a steering actuator 16 for steering the rear wheel 13, and is constituted to enable the rear wheel 13 to turn to the left and the right through the steering actuator 16 with the rear wheel 13 being rotated through the rear-wheel drive motor 24.

The attitude-control means 22 of the controller 21 according to this second embodiment is constituted to control the front and the rear-wheel drive motors 23, 24 by applying opposing driving torque to each of the front and the rear wheels 11, 13 when the vehicle body is inclined transversely by steering the rear wheel 13, thereby causing biasing force for urging the vehicle body in the transverse direction, and then to transversely maintain the vehicle body in balance with this biasing force. For example, steering the rear wheel 13 to the right allows the vehicle body to incline leftward, and then reducing the driving torque of the front-wheel drive motor 23 while increasing the driving torque of the rear-wheel drive motor 24 results in further inclination of the vehicle body to the left. In order to restoring the vehicle body to the upright position, the driving torque of the front-wheel drive motor 23 is increased while the driving torque of the rear-wheel drive motor 24 is reduced. In the constitution to steer by means of the rear wheel 13 as is the case with this second embodiment, the same effect is also achieved as with the first embodiment.

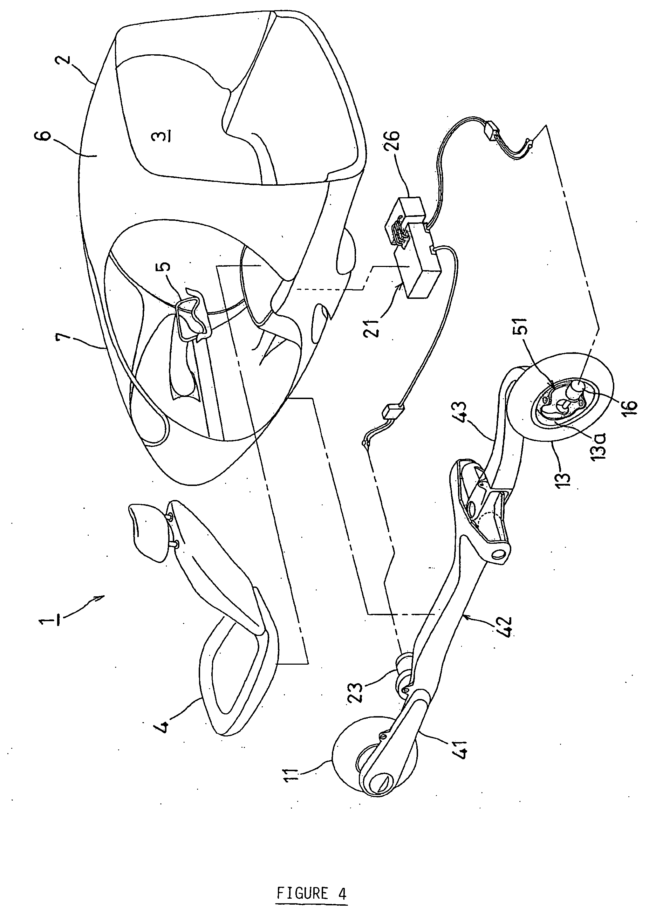

A detailed description of a third embodiment of a motorcycle is provided herein with reference to Fig. 4.

Fig. 4 is an exploded perspective view, showing a constitution of a motorcycle causing biasing force in the transverse direction by steering a rear wheel. In the drawing, the similar or equivalent elements described in the Figs. 1 or 3 are designated with the same numerals and their detailed description is not repeated as appropriate.

The motorcycle 1 shown in the Fig. 4 consists of the rear wheel 13 as a steering wheel and the front wheel 11 only as a drive wheel. The rear wheel 13 is supported by the vehicle body frame 42 at its rear end through the rear wheel swing arm 43 and a steering device 51 disposed at the rear end of this swing arm 43. The rear wheel swing arm 43 pivotally up and down connects its front end to the vehicle body frame 42.

The steering device 51 not only rotatably supports the rear wheel 13, but also employs a constitution to steer by means of the steering actuator 16, which is disposed within a hub 13a of the rear wheel 13.

The front wheel 11 of the motorcycle 1 is pivotally up and down supported by the vehicle frame 42 at its front end through the front wheel swing arm 41. The front wheel 11 is rotatably mounted at the front end of the front wheel swing arm 41 with no left/right turning capability. The front wheel 11 rotates by driving force transmitted through the belt transmission device (not shown) within the swing arm 41 from the front-wheel drive motor 23 disposed at the front end of the vehicle body frame 42. Furthermore, the power source of the front wheel 11 may be used for an engine (not shown) other than the motors.

The attitude-control means 22 of the controller 21 according to this third embodiment employs a constitution to transversely maintain the vehicle body in balance with biasing force acting in the lateral direction of the vehicle body by steering the rear wheel 13. More particularly, steering the rear wheel 13, for example to the right allows the vehicle body to turn to the left while allowing biasing force for inclining the vehicle body leftward to be exerted thereon. Since the magnitude and the direction of this biasing force depends on the steering angle of the rear wheel 13, control thereof enables balancing in the transverse direction.

Namely, since the motorcycle 1 uses the biasing force caused by the changes of the steering angle of the rear wheel 13 in lieu of a force exerted on the vehicle body by a rider's weight shift, it becomes unnecessary for the rider to shift his/her weight in order to transversely maintain the vehicle body in balance, or only a slight weight shift is required even if necessary.

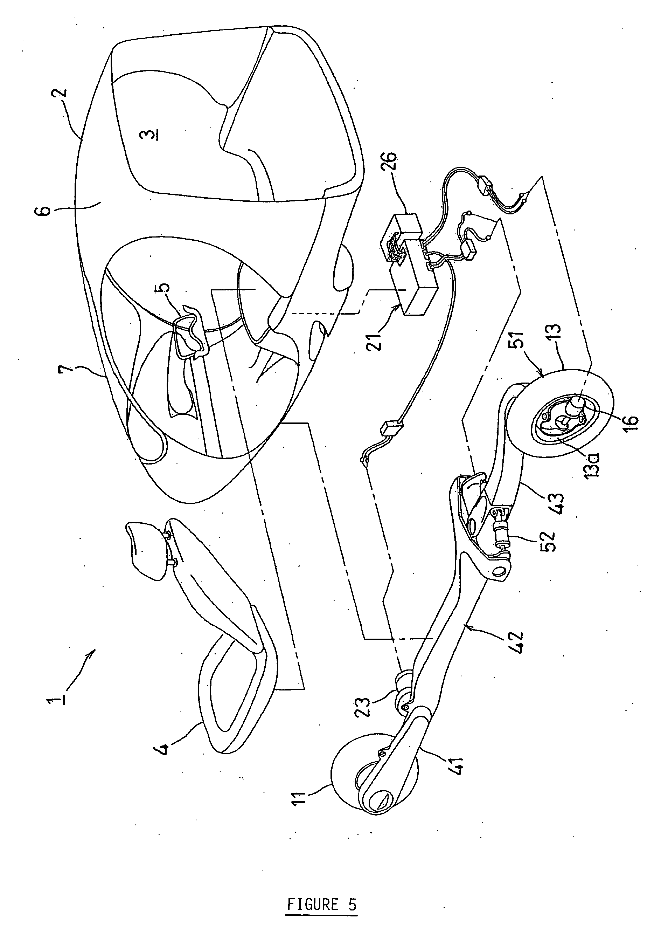

A detailed description of a fourth embodiment of a motorcycle is provided herein with reference to Fig. 5.

Fig. 5 is an exploded perspective view, showing a constitution of a motorcycle causing biasing force in the transverse direction by a parallel movement of a rear wheel. In the drawing, the similar or equivalent elements described in the Figs. 1 or 4 are designated with the same numerals and their detailed description is not repeated as appropriate.

The motorcycle 1 shown in the Fig. 5 consists of the rear wheel 13 as a steering wheel and the front wheel 11 only as a drive wheel, wherein the position of the rear wheel 13 can be changed in the lateral direction. The rear wheel 13 is supported oscillatorily by vehicle body frame 42 at its rear end through the rear wheel swing arm 43 and the steering device 51.

The rear wheel swing arm 43 is formed so that its front end pivotally up and down connected to the vehicle body frame 42 can also oscillate in the transverse direction with respect to the vehicle body frame 42, and is constituted to enable change of the transverse angle through an oscillating actuator 52. Allowing the rear wheel swing arm 43 to oscillate in the transverse direction and then permitting the steering device 51 discussed later to steer the rear wheel 13 enables the rear wheel 13 to move parallel to the lateral direction of the vehicle body with respect to its center line.

The steering device 51 not only rotatably supports the rear wheel 13, but also employs a constitution to steer through a steering actuator 16, which is disposed within the hub 13a of the rear wheel 13. The rear wheel 13 is steered by means of shifting the rear wheel swing arm 43 to the transverse direction, and then inclining the rear wheel 13 with respect to the center line of the vehicle body, or by means of a steering actuator 16 with the rear wheel 13 positioned at the central portion in the lateral direction of the vehicle body, avoiding the swing arm 43 from oscillating. The vehicle body balances in the transverse direction by the attitude-control means 22 that controls the swing arm 43 and the steering device 51 as discussed later.

The front wheel 11 of the motorcycle 1 is pivotally up and down supported by the vehicle frame 42 at its front end through the front wheel swing arm 41. The front wheel 11 is rotatably mounted at the front end of the front wheel swing arm 41 with no left/right turning capability. The front wheel 11 rotates by driving force transmitted through the belt transmission device (not shown) within the swing arm 41 from the front-wheel drive motor 23 disposed at the front end of the vehicle body frame 42. Furthermore, the power source of the front wheel 11 may be used for an engine (not shown) other than the motors.

The attitude-control means 22 of the controller 21 according to this fourth embodiment employs a constitution to transversely maintain the vehicle body in balance with biasing force acting in the lateral direction of the vehicle body by a side-to-side parallel movement of the rear wheel 13 as described above. More specifically, in the motorcycle 1, the rear wheel 13 is moved in parallel, for example to the right side of the vehicle body from the central portion with respect to transverse direction thereof, thereby exerting biasing force to incline the vehicle body leftward thereon. Also, the rear wheel 13 is moved to the other side of that described above from the central portion, thereby exerting biasing force to incline the vehicle body rightward thereon. Since the magnitude and the direction of this biasing force depends on movement directions and displacement of this rear wheel 13, control thereof enables balancing in the transverse direction.

Namely, since this motorcycle 1 uses the biasing force caused by the parallel movement of the rear wheel 13 in lieu of a force exerted on the vehicle body by a rider's weight shift, it becomes unnecessary for the rider to shift his/her weight in order to transversely maintain the vehicle body in balance, or a only slight weight shift is required even if necessary.

This fourth embodiment shows an example wherein a side-to-side parallel movement of the rear wheel 13 causes biasing force in the transverse direction, however, both biasing force (see the Third Embodiment) in the transverse direction generated by steering the rear wheel 13 and the biasing force caused by the parallel movement may be used together for controlling the attitude of the vehicle body.

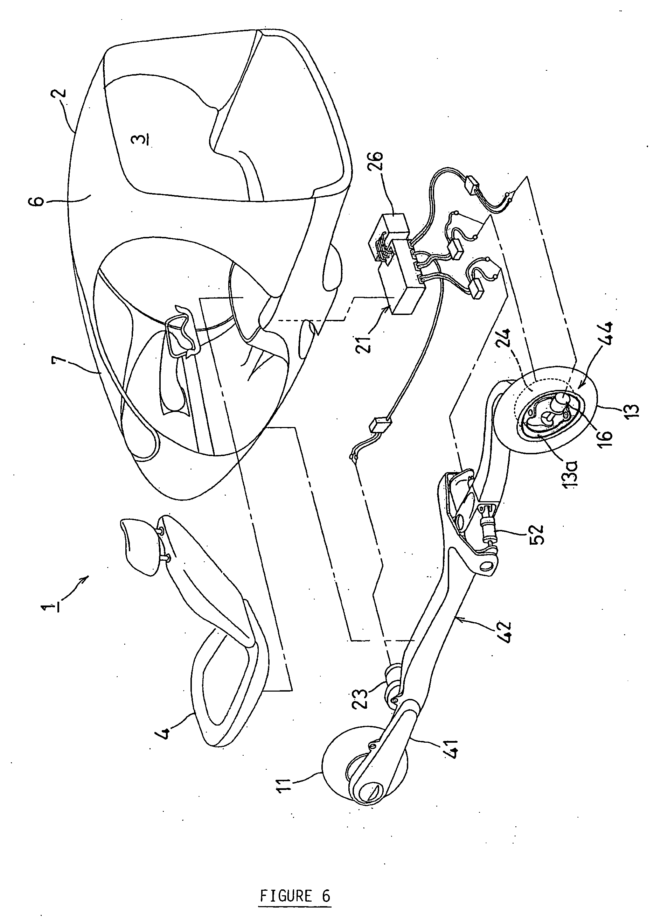

According to a fifth embodiment, the biasing force in the transverse direction is controlled to transversely maintain the vehicle body in balance by simultaneously using all the methods such as changing driving torque of the front and the rear wheels, controlling the steering angle of the rear wheel, and the parallel movement of the rear wheel to the transverse direction as shown in the Fig. 6.

Fig. 6 is an exploded perspective view, showing a constitution of a motorcycle according to the fifth embodiment that employs all the control methods of the first to fourth embodiments. In the drawing, the similar or equivalent elements described in the Figs. 1 or 5 are designated with the same numerals and their detailed description is not repeated as appropriate.

The motorcycle 1 shown in the Fig. 6 employs a constitution to run with the front and the rear wheels 11, 13 as drive wheels and to steer by means of the rear wheel 13. The front wheel 11 is supported rotatably and oscillatorily by the vehicle frame 42 at its front end through the front wheel swing arm 41 with no left/right turning capability. The front wheel 11 rotates by driving force transmitted through the belt transmission device (not shown) within the front wheel swing arm 41 from the front-wheel drive motor 23 disposed at the front end of the vehicle body frame 42.

The rear wheel 13 is supported by the vehicle body frame 42 through the rear wheel swing arm 43 and the rear wheel drive device 44 disposed at the rear end of this rear wheel swing arm 43. The rear wheel swing arm 43 is formed so that its front end connected oscillatorily to the vehicle body frame 42 can also oscillate in the transverse direction with respect to the vehicle body frame 42, and is constituted to enable change of the transverse angle through an oscillating actuator 52. Allowing the rear wheel swing arm 43 to oscillate in the transverse direction and then permitting the rear wheel drive device 44 discussed later to steer the rear wheel 13 enables the rear wheel 13 to move parallel to the lateral direction of the vehicle body with respect to its center line.

The rear wheel drive device 44 is comprised of a rear-wheel drive motor 24 disposed within the hub 13 of the rear wheel 13 and the steering actuator 16 for steering the rear wheel 13, and is constituted to enable the rear wheel 13 to steer to the left and the right through the steering actuator 16 with the rear wheel 13 being rotated through the rear-wheel drive motor 24.

The attitude-control means 22 of the controller 21 according to this fifth embodiment employs a constitution to transversely maintain a vehicle body in balance by using biasing force in the transverse direction caused by controlling the front and the rear-wheel drive motors 23, 24 by applying opposing driving torque to each of the front and the rear wheels 11, 13, biasing force in the transverse direction caused by steering the rear wheel 13 through the steering actuator 16, and biasing force in the transverse direction caused by a parallel movement of the rear wheel 13 through the rear wheel swing arm 43.

Namely, in order to restore the vehicle body inclined leftward to the upright position, the driving torque of the front wheel 11 is increased while the driving torque of the rear wheel 13 is reduced, then steering the rear wheel 13 to the left and further shifting the rear wheel 13 to the left in parallel through the rear wheel swing arm 43. In addition, instead of causing biasing forces simultaneously by using the three different means to cause biasing force as described above, activating each of the three different means in succession with a time lag may also gradually increase the biasing force in the transverse direction.

In case this fifth embodiment may be employed, the same effect is also achieved as with other embodiments.

In the first to fifth embodiments described above, if the vehicle body of the motorcycle 1 is being halted, the rider still has to hold the motorcycle 1 as is the case with the conventional motorcycle 1, however, an auxiliary wheel (not shown) may be deployed to maintain the upright position when the vehicle has halted or at low running speeds. The auxiliary wheel is rotatably mounted at the oscillating end of the auxiliary wheel swing arm pivotally supported by the vehicle body frame 42 and is constituted to be able to move between the grounding position sideward of the rear wheel 13 and the housing position aslant upward from the rear wheel 13 position by oscillating the swing arm.

The description above discloses a motorcycle comprising: a front-wheel drive motor; a rear-wheel drive motor; an inclination sensor for detecting the inclination state of a vehicle body; and an attitude controller for controlling both the motors based on the detected data from the inclination sensor and changing driving torque of front and rear wheels; wherein the attitude-controller controls both the motors so that the front-wheel driving torque and the rear-wheel torque have opposing directions each other when the vehicle body is inclined transversely, and then to maintain the vehicle body transversely in balance with biasing force created in the lateral direction of the vehicle body by the torque control.

Accordingly, the driving torque of the front wheel is reduced while the driving torque of the rear wheel is increased with the front wheel steered, for example, to the left allows biasing force for inclining the vehicle body leftward to be exerted thereon, thereby inclining the vehicle body leftward, wherein changing driving torque of the front and the rear wheels in an opposite manner to that described above allows biasing force to be exerted on the vehicle body in the opposite direction to that described above for returning the vehicle body to an upright position. Thus, using this biasing force enables the vehicle body to balance in a transverse direction. Namely, since this motorcycle uses the biasing force caused by the torque changes in lieu of a force exerted on the vehicle body by a rider's weight shift, it becomes unnecessary for the rider to shift his/her weight in order to transversely maintain the vehicle body in balance, or only a slight weight shift is required even if necessary.

Or, in other words, since the biasing force caused by the torque changes of the front and the rear wheels in lieu of a force exerted on the vehicle body by a rider's weight shift is used, it becomes unnecessary for the rider to shift his/her weight in order to transversely maintain the vehicle body in balance, or only a slight weight shift is required even if necessary.

Thus, this enables the motorcycle to have a function to balance in the transverse direction, thereby reducing a rider's fatigue.

The description above further discloses a motorcycle being steerable by a rear-wheel-steering mechanism only, comprising: a motor for changing a steering angle of the rear wheel; an inclination sensor for detecting the inclination state of a vehicle body; and an attitude-controller for controlling the motor based on the detected data from the inclination sensor; wherein the attitude controller maintains the vehicle body transversely in balance with biasing force created in the lateral direction of the vehicle body by steering the rear wheel.

Accordingly, steering the rear wheel, for example, to the right allows the vehicle body to turn to the left while allowing biasing force for inclining the vehicle body leftward to be exerted thereon. Since the magnitude and the direction of this biasing force depends on the steering angle of the rear wheel, control thereof enables balancing in the transverse direction. Namely, since this motorcycle uses the biasing force caused by the changes of the steering angle of the rear wheel in lieu of a force exerted on the vehicle body by a rider's weight shift, it becomes unnecessary for the rider to shift his/her weight in order to transversely maintain the vehicle body in balance, or only a slight weight shift is required even if necessary.

Or, in other words, since the biasing force caused by the changes of the steering angle of the rear wheel in lieu of a force exerted on the vehicle body by a rider's weight shift is used, it becomes unnecessary for the rider to shift his/her weight in order to transversely maintain the vehicle body in balance, or only a slight weight shift is required even if necessary. Thus, this enables the motorcycle to have a function to balance in the transverse direction, thereby reducing a rider's fatigue.

The description above further refers to a motorcycle having a vehicle body to which a rear wheel is disposed to be movable parallel to transverse direction thereof, comprising: a motor for changing the movement direction and the displacement distance of the rear wheel; an inclination sensor for detecting the inclination state of the vehicle body; and an attitude-controller for controlling the motor based on the detected data from the inclination sensor; wherein the attitude controller maintains the vehicle body transversely in balance with biasing force created in the lateral direction of the vehicle body by the parallel movement of the rear wheel.

Accordingly, the rear wheel is moved in parallel, for example, to the right side of the vehicle body from the central portion with respect to transverse direction thereof, thereby exerting biasing force to incline the vehicle body leftward thereon while the rear wheel is moved to the other side of that described above from the central portion, thereby exerting biasing force to incline the vehicle body rightward thereon. Since the magnitude and the direction of this biasing force depends on movement directions and displacement of this rear wheel, control thereof enables balancing in the transverse direction of the vehicle body. Namely, since this motorcycle uses the biasing force caused by the parallel movement of the rear wheel in lieu of a force exerted on the vehicle body by a rider's weight shift, it becomes unnecessary for the rider to shift his/her weight in order to transversely maintain the vehicle body in balance, or a only slight weight shift is required even if necessary.

Or, in other words, since the biasing force caused by the parallel movement of the rear wheel to transversely maintain the vehicle body in balance in lieu of a force exerted on the vehicle body by a rider's weight shift is used, it becomes unnecessary for the rider to shift his/her weight in order to balance in the transverse direction or only a slight weight shift is required even if necessary. Thus, this enables the motorcycle to have a function to balance in the transverse direction, thereby reducing a rider's fatigue.

Thus, briefly summarizing the above, there is provided a motorcycle having a function to balance in the transverse direction, thereby reducing a rider's fatigue, wherein front and rear-wheel drive motors 23, 24 and an inclination angle detection sensor 33 are provided. An attitude-controller 21 for controlling both the motors 23, 24 based on the detected data from the inclination angle detection sensor 33, and changing driving torque of the front and the rear wheels 11, 13 is provided. The controller 21 employs a constitution to control both the motors 23, 24 by applying opposing driving torque to each of the front and the rear wheels 11, 13 when the vehicle body is inclined transversely, and then to transversely maintain the vehicle body in balance with biasing force acting in the lateral direction of the vehicle body by means of this torque control.

Said motorcycle may comprise a front-wheel drive motor; a rear-wheel drive motor; an inclination sensor for detecting the inclination state of a vehicle body; and an attitude controller for controlling both the motors based on the detected data from the inclination sensor and changing driving torque of front and rear wheels; wherein the attitude-controller controls both the motors so that the front-wheel driving torque and the rear-wheel torque have opposing directions each other when the vehicle body is inclined transversely, and then to maintain the vehicle body transversely in balance with biasing force created in the lateral direction of the vehicle body by the torque control.

Or, said motorcycle may also be steerable by only a rear-wheel-steering mechanism only, and may comprise a motor for changing a steering angle of the rear wheel; an inclination sensor for detecting the inclination state of a vehicle body; and an attitude-controller for controlling the motor based on the detected data from the inclination sensor; wherein the attitude controller maintains the vehicle body transversely in balance with biasing force created in the lateral direction of the vehicle body by steering the rear wheel.

Or, said motorcycle may have a vehicle body to which a rear wheel is disposed to be movable parallel to transverse direction thereof, and may comprise a motor for changing the movement direction and the displacement distance of the rear wheel; an inclination sensor for detecting the inclination state of the vehicle body; and an attitude-controller for controlling the motor based on the detected data from the inclination sensor; wherein the attitude controller maintains the vehicle body transversely in balance with biasing force created in the lateral direction of the vehicle body by the parallel movement of the rear wheel.

The description above discloses (amongst others) a two-wheeled vehicle comprising a vehicle body and front and rear wheels (11,13), wherein at least either one of the front or rear wheels (11,13) is drivable by a front-wheel and/or rear-wheel drive device (23,24) and either the front wheel (11) or the rear wheel (13) is adapted to be steerable by means of a steering device, said steering device comprising a steering operating means (5) and a steering actuator (16), wherein a steering movement of the steering operating means (5) for steering operation is detectable and the respectively steered front or rear wheel (11,13) is adapted to change a steering angle by an action of the steering actuator (16).

The description above further discloses a two-wheeled vehicle comprising a vehicle body and front and rear wheels (11,13), wherein at least either one of the front or rear wheels (11,13) is drivable by a front-wheel and/or rear-wheel drive device (23,24) and either the front wheel (11) or the rear wheel (13) is adapted to be steerable by means of a steering device, an inclination sensor (33) for detecting an inclination state of a vehicle body and an attitude-control means (22) for creating a biasing force in the lateral direction of the vehicle body being based on a current status of a vehicle body detected by the inclination sensor for balancing the two-wheeled vehicle in a transverse direction of the vehicle body. Therein, said steering device may comprise a steering operating means (5) and a steering actuator (16), wherein a steering movement of the steering operating means (5) for steering operation is detectable and the respectively steered front or rear wheel (11,13) is adapted to change a steering angle by an action of the steering actuator (16).

## Claims

1. Two-wheeled vehicle comprising a vehicle body and front and rear wheels (11,13), wherein at least either one of the front or rear wheels (11,13) is drivable by a front-wheel and/or rear-wheel drive device (23,24) and either the front wheel (11) or the rear wheel (13) is adapted to be steerable by means of a steering device, said steering device comprising a steering operating means (5) and a steering actuator (16), wherein a steering movement of the steering operating means (5) for steering operation is detectable and the respectively steered front or rear wheel (11,13) is adapted to change a steering angle by an action of the steering actuator (16).

2. Two-wheeled vehicle according to claim 1, **characterized by** a power means (26) comprising a battery for supplying electricity.

3. Two-wheeled vehicle according to claim 2, **characterized in that** at least one of the drive devices (23,24) is used as a generator for battery charging, in particular during downhill running of the two-wheeled vehicle.

4. Two-wheeled vehicle according to at least one of the preceding claims 1 to 3, **characterized by** a steering angle detection sensor (15) and/or a skid detection sensor (34) to detect a movement of the vehicle body in the transverse direction by the action of side winds or other reasons and/or a vehicle speed sensor (35) to detect the vehicle speed and/or an airspeed detection sensor (36) to detect head wind, tail wind and side winds and/or a GPS (37) to detect a running direction connected to the controller (21) being provided for further detection of the current status of the vehicle body.

5. Two-wheeled vehicle according to at least one of the preceding claims 1 to 4, **characterized in that** the controller (21) is provided with an artificial intelligence device, such as GA, fuzzy controller or neutral network.

6. Two-wheeled vehicle according to at least one of the preceding claims 1 to 5, **characterized in that** the two-wheeled vehicle is a motorcycle having a cab (3) with a seat (4) for a rider, in which the rider is seated with his/her legs adjacent to each other and/or the steering operating means (5) is a handlebar and the steering movement is a shift in a rotation angle of the handlebar.

7. Two-wheeled vehicle according to at least one of the preceding claims 1 to 6, **characterized in that** the front wheel (11) and the rear wheel (13) are respectively drivable by a front-wheel drive device (23) and a rear-wheel drive device (24), wherein the attitude-control means (22) is adapted to apply a torque control to the front and rear wheels (11,13) for creating the biasing force in the lateral direction of the vehicle body based on the current status of the vehicle body detected by the inclination sensor for balancing the two-wheeled vehicle in the transverse direction of the vehicle body.

8. Two-wheeled vehicle according to claim 7, **characterized in that** the attitude-control means (22) is adapted to control the front-wheel and rear-wheel drive devices (23,24) by applying a front-wheel driving torque and a rear-wheel driving torque having opposing directions to each other when the vehicle body is inclined transversely.

9. Two-wheeled vehicle according to claim 7 or 8, **characterized in that** the front wheel (11 ) is rotatably supported by a front fork (12), wherein the steering device is adapted to change the steering angle of the front fork (12), the front-wheel drive device (23) is provided in a hub (11a) of the front wheel (11) and the rear wheel is rotatably supported by a rear-wheel swing arm (14), wherein the rear-wheel drive device (24) comprises a rear-wheel drive motor (24) disposed under the seat (4) of the rider for driving the rear wheel (13) via a transmission device provided in the rear-wheel swing arm (14).

10. Two-wheeled vehicle according to claim 7 or 8, **characterized in that** the front and rear wheels (11,13) are respectively supported by front-wheel and rear-wheel swing arms (41,43), wherein the steering device is adapted to change the steering angle of the rear wheel (13), the rear wheel drive device (44) is comprised of a motor (24) provided in a hub (13a) of the rear wheel (13) and the steering actuator (16), and the front-wheel drive device (23) is disposed at the front end of the vehicle body frame (42), wherein a driving force is transmitted to the front wheel (11) via a transmission device provided in the front-wheel swing arm (41).

11. Two-wheeled vehicle according to at least one of the preceding claims 7 to 10, **characterized by** a driving control means (25) comprises a circuit to increase or decrease an output to the front-wheel drive device (23) and the rear-wheel drive device (24,44) in correspondence with a displacement of an accelerator means (27) applied by a rider.

12. Two-wheeled vehicle according to at least one of the preceding claims 7 to 11, **characterized in that** the attitude-control means (22) comprises a circuit to control the driving torques of the front-wheel and rear-wheel drive devices (23,24,44) based on the current status of the vehicle body, wherein opposing driving torques are applied to each of the front and the rear wheels (11,13) when the vehicle body is inclined transversely.

13. Two-wheeled vehicle according to at least one of the preceding claims 1 to 12, **characterized in that** the front and rear wheels (11,13) are respectively supported by front-wheel and rear-wheel swing arms (41,43), wherein the front wheel (11) as a driving wheel is drivable by means of a front-wheel drive device (23) and the rear wheel (13) as a steering wheel is steerable by means of the steering device (51), and wherein the steering device (51) is disposed at a rear end of the rear-wheel swing arm (43).

14. Two-wheeled vehicle according to claim 13, **characterized in that** the attitude-control means (22) is adapted to create the biasing force in the lateral direction of the vehicle body by modifying the steering angle of the rear wheel (13) based on the current status of the vehicle body detected by the inclination sensor for maintaining the two-wheeled vehicle transversely in balance.

15. Two-wheeled vehicle according to claim 13 or 14, **characterized in that** the rear-wheel swing arm (43) is adapted to oscillate in a transverse direction with respect to a vehicle body frame (42), wherein a transverse angle is changeable by means of an oscillating actuator (52) and the attitude control means (22) is adapted to create the biasing force in the lateral direction of the vehicle body by moving the rear wheel (13) parallel to the lateral direction with respect to the vehicles center line based on the current status of the vehicle body detected by the inclination sensor for maintaining the two-wheeled vehicle transversely in balance.
